# EUROPÄISCHE PATENTANMELDUNG

(11) **EP 0 794 626 A2**
(43) Veröffentlichungstag der Anmeldung: **10.09.1997**
(21) Anmeldenummer: 97101309.9
(22) Anmeldetag: 29.01.1997
(51) Int. Cl.: H04J 3/16, H04Q 11/04, H04J 3/14, H04L 1/22, H04B 1/74

(54) **SDH-Nachrichtenübertragungsnetzwerk**

(30) Priorität: 06.03.1996 DE 19608621
(71) Anmelder: NOKIA TELECOMMUNICATIONS OY, 02600 Espoo (FI)
(72) Erfinder: Moser, Bernd, Dipl.-Ing., 40629 Düsseldorf (DE)
(74) Vertreter: Cohausz & Florack

(57) **Zusammenfassung**

Die Erfindung betrifft ein Telekommunikationsnetzwerk zur Verarbeitung von digitalen Signalen, insbesondere nach dem Synchronous Digital Hierarchy (SDH)-Standard, bei welchem der Transport von digitalen seriellen Datenströmen (tributary units, TU) innerhalb eines Knotenpunktes oder zwischen zwei Knotenpunkten mittels synchroner Transportrahmen (STM-N) erfolgt, welche einen zeilen- und spaltenweisen Aufbau mit einzelnen Blöcken von jeweils insbesondere 8 Bit aufweisen und aus einem die Nutzlast (payload) enthaltenden Abschnitt sowie einem Management-informationen enthaltenden Abschnitt (Section Overhead, SOH; path overhead POH) besteht, wobei in den für die Nutzlast vorgesehenen Abschnitt des jeweiligen Transportrahmens (STM-N) Datenströme unterschiedlicher Größen und Bitraten (TU-12; TU-2; TU-3; VC-4) in vorgegebene Zeitschlitze eingemappt werden. Die Aufgabe, eine Umkonfigurierung des Netzwerks unter optimaler Ausnutzung der Übertragungskapazität, d.h. unter Ausbildung möglichst weniger nur teilbelegter Gruppen zu ermöglichen, wird dadurch gelöst, daß zur Umkonfigurierung von Datenströmen innerhalb des Netzwerkes der umzukonfigurierende Datenstrom zunächst gleichzeitig in seinen bisherigen (alten) Zeitschlitzen und in den gewünschten (neuen) Zeitschlitzen eingemappt gesendet und in den alten Zeitschlitzen empfangen wird, daß anschließend nur noch die gewünschten (neuen) Zeitschlitze empfangen werden und daß danach der umkonfigurierte Datenstrom nur noch in die gewünschten (neuen) Zeitschlitze eingemappt gesendet wird.

## Beschreibung

Die Erfindung betrifft ein Telekommunikationsnetzwerk zur Verarbeitung von digitalen Signalen, insbesondere nach dem Synchronous Digital Hierarchy (SDH)-Standard, bei welchem der Transport von digitalen seriellen Datenströmen (tributary units, TU) innerhalb eines Knotenpunktes oder zwischen zwei Knotenpunkten mittels synchroner Transportrahmen (STM-N) erfolgt, welche einen zeilen- und spaltenweisen Aufbau mit einzelnen Blöcken, insbesondere von jeweils 8 Bit, aufweisen und aus einem die Nutzlast (payload) enthaltenden Abschnitt sowie einem Managementinformationen enthaltenden Abschnitt (Section Overhead, SOH; path overhead POH) besteht, wobei in dem für die Nutzlast vorgesehenen Abschnitt des jeweiligen Transportrahmens (STM-N) Datenströme unterschiedlicher Größen und Bitraten (TU-12; TU-2; TU-3; VC 4) in vorgegebene Zeitschlitze eingemappt werden. Ferner betrifft die Erfindung ein Verfahren zum Managen eines solchen Telekommunikationsnetzwerks.

Auf dem SDH-Standard beruhende Telekommunikationsnetzwerke sind als solche bekannt (ITU-T Recommendation G.70X (DRAFT); Draft Text of New/Revised Recommendations for Resolution No 1 Approval at SG 15 Meeting, November 1995). Bei SDH-Netzwerken handelt es sich um kosteneffektive flexible Telekommunikationsnetzwerke, deren Grundidee darin besteht, daß ein Datenstrom vorgegebener Bitrate, z.B. zwei Megabit, in einen sog. "virtuellen Container" (VC 12) eingemapped, mittels eines direkten synchronen Multiplexverfahrens in eine beliebige Hierarchiestufe des SDH-Signals gemultiplext werden kann, ohne daß Zwischenstufen benötigt werden, die bisher üblicherweise und notwendigerweise zwischengeschaltet waren. Die einzelnen Netzwerkknoten des SDH-Netzwerks können direkt miteinander verbunden werden.

Die SDH-Technologie läßt sich sowohl für lokale Netzwerke als auch für Verbindungen zwischen den Vermittlungsstellen und im Weitverkehrsnetz einsetzen. Es ergibt sich eine einheitliche Netzwerkstruktur, die letztlich ermöglicht, Netzwerkbaugruppen unterschiedlicher Hersteller direkt miteinander verbinden zu können.

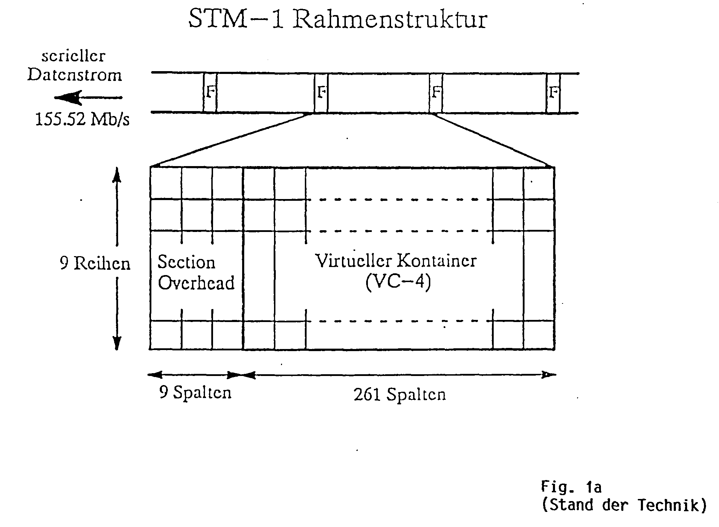

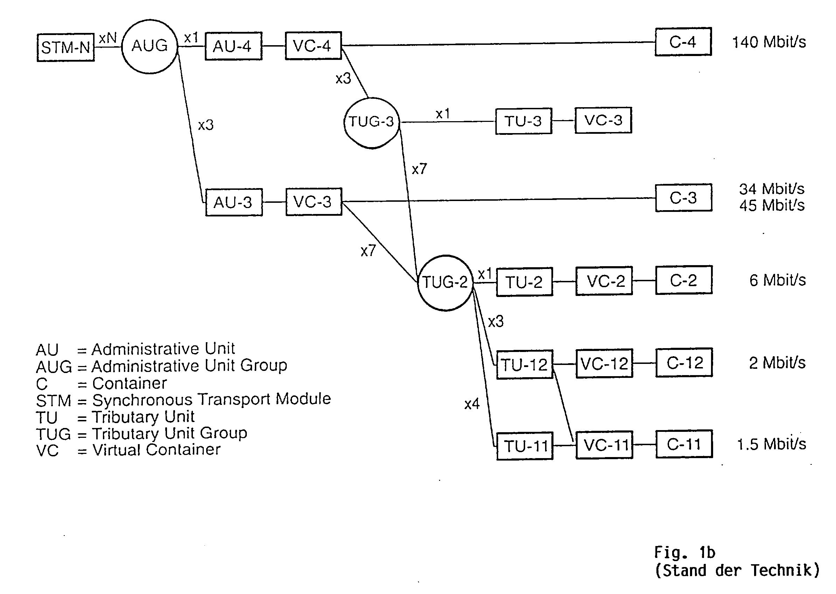

Die Übertragung der Datenströme erfolgt bei SDH mittels einheitlich aufgebauter Transportrahmen, dessen Grundstruktur aus Blöcken zu üblicherweise je 8 Bit (1 Byte) besteht, die in Zeilen und Spalten organisiert sind. Innerhalb des übertragenden Rahmens ist aufgrund einer Markierung die Position eines jeden Bytes bekannt. In diesem zweidimensional dargestellten Rahmen wird der serielle Datenstrom von links nach rechts und von oben nach unten zeilenweise übertragen, d.h. mittels eines solchen Transportrahmens werden hierarchisch geordnete Datenströme der einzelnen Multiplexstufen entlang des synchronen Netzwerks transportiert. Zur Organisation des Transportrahmens ist ein die Managementinformationen enthaltender Abschnitt (section overhead, SOH) vorgesehen, der dem eigentlichen für das Nutzsignal zur Verfügung stehenden Abschnitt vorgeordnet ist. Der SOH-Abschnitt wird am sendeseitigen Knoten aufgebaut und am jeweiligen empfangenden Knoten abgeschlossen, d.h. er gehört nur zu dem individuellen Transportabschnitt. Die restliche Kapazität des synchronen Transportrahmens steht im wesentlichen für die Nutzlast (payload) zur Verfügung, um im SDH-Netzwerk von einem zum anderen Punkt, in der Regel über mehrere Knoten transportiert zu werden. In den Bereich der Nutzlast sind die einzelnen Datenströme (VC-4, TU-12, TU-2, TU-3, vgl. Fig.1b) je nach ihrer individuellen Größe und Bitrate bestimmten "Zeitschlitzen" zugeordnet "eingemappt".

Die erste Stufe einer solchen SDH-Rahmenstruktur bezeichnet man als STM-1 (Fig. 1a). Ein solcher Rahmen besteht aus neun Zeilen und insgesamt 270 Spalten à 8 Bytes. Die Wiederholrate dieser Struktur ist 8000/pro Sekunde, so daß die resultierende Bitrate der ersten Transportstufe in der SDH demnach 155,52 Megabit/Sekunde ist. Dabei nimmt der Managementabschnitt die ersten neun Spalten des STM-1 Rahmens ein, also insgesamt 81 Bytes. Die restlichen 261 Spalten des STM-1 Rahmens, also 2349 Bytes, stehen als Nutzlast in einem sog. virtuellen Container (VC-4) zur Verfügung.

Dabei ist innerhalb eines bestimmten Bereichs des virtuellen Containers (VC-4) ein weiterer Managementabschnitt eingebettet, der sog. path overhead (POH). Dieser Bereich, die erste Spalte des VC-4 mit 9 Bytes, wird genutzt für die Alarmüberwachung und Qualitätsüberwachung, die benötigt wird, um den Transport der Daten zwischen den Endpunkten sicherzustellen.

An den Endpunkten wird der virtuelle Container zusammengesetzt bzw. in die einzelnen Datenströme zerlegt. Der VC-4 POH befindet sich in der ersten Spalte des VC-4, nimmt also 9 Bytes pro Rahmen ein.

Wie insbesondere aus Fig.1b hervorgeht, die den Aufbau der unterschiedlichen Hierarchieebenen in der SDH-Struktur zeigt, kann ein VC-4 selbst entweder eine Nutzlast von 140 Mbit/s oder Elemente der nächsten, niedrigeren Hierarchieebene der SDH enthalten.

Beispielsweise kann die zweithöchste Hierarchieebene aus TUG-3 Elementen oder TU-3 Elementen zusammengesetzt sein.

Die einzelnen Datenströme in den jeweiligen Hierarchiestufen werden dabei als tributary units (TUs) bezeichnet. Diese können gemäß der SDH-Technologie unterschiedliche Datenströme beinhalten. Man bezeichnet sie je nach der in ihnen enthaltenen Datenrate in Megabit/Sekunde als TU-11(1,5), TU-12(2), TU-2(6), TU-3(34 oder 44), oder VC-4(140 Megabit/Sekunde).

Will man nun ausgehend von einer Übertragungskapazität von etwa 150 Megabit/Sekunde, die in einem STM-1 VC 4 zur Verfügung gestellt wird, Datenströme niedriger Bitraten übertragen, wird eine spezielle Rahmenstruktur für die Datenströme aufgebaut, die jeweils nicht den kompletten virtuellen Container ausfüllen.

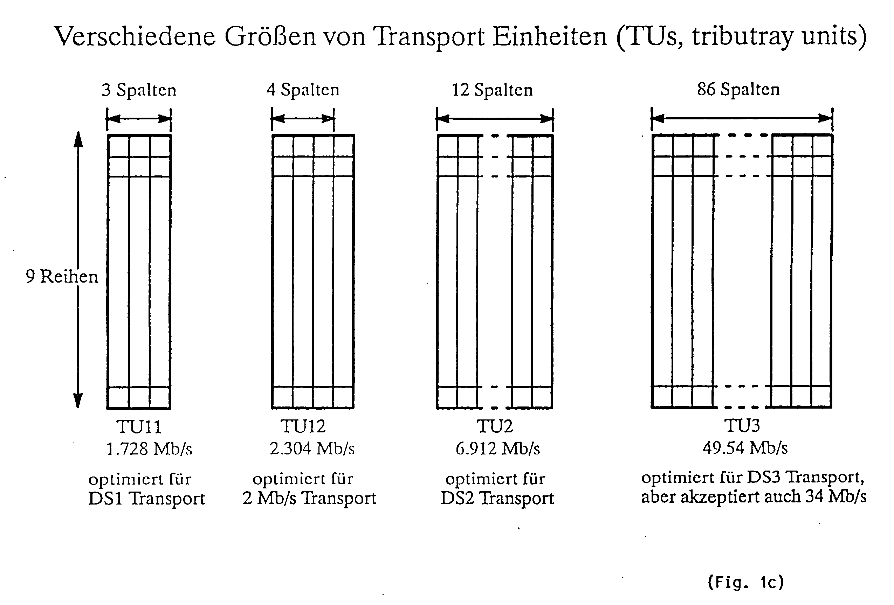

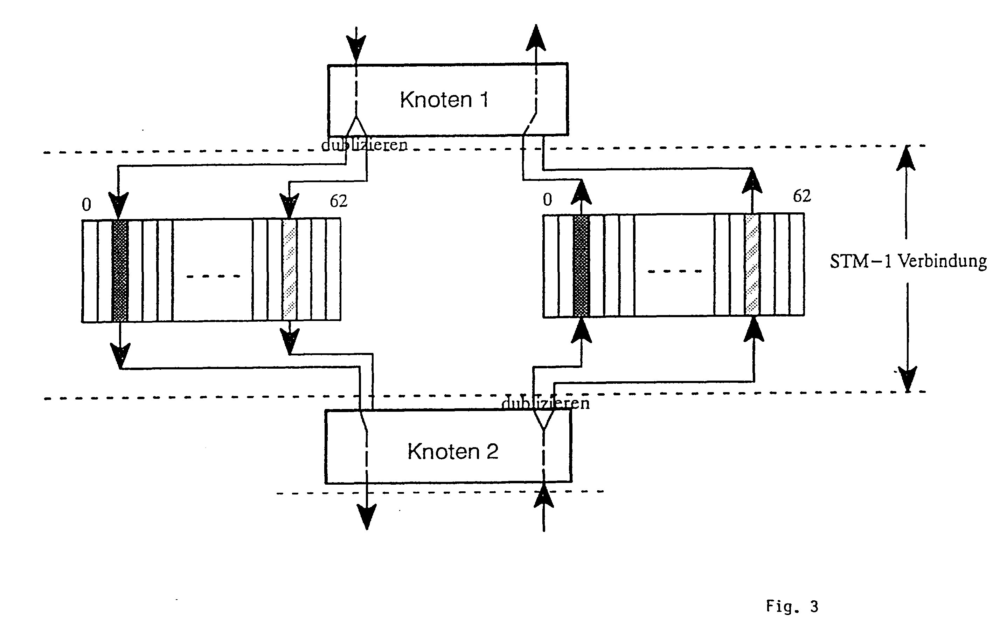

Dabei sind die in der SDH definierten verschiedenen Größen von TU-Rahmen wie folgt aufgebaut (Fig. 1c):
TU-12: In einem TU-12 Rahmen sind 36 Bytes enthalten, organisiert in 4 Spalten zu 9 Bytes. In einen STM-1 Rahmen können 63 solcher TU-12 Rahmen eingemappt (gemultiplext) werden. Hierbei handelt es sich um die kleinste TU in der SDH-Struktur, während TU-11 die kleinste TU in der SONET Struktur darstellt.
TU-2: Die TU-2 enthält 108 Bytes mit 12 Spalten zu je 9 Bytes. Dabei können 21 TU-2 in einen STM-1 Rahmen eingemappt werden. Eine TU-2 kann entweder für einen Datenstrom von 6Mbit/s ausgelegt sein oder als TUG-2 gestaltet sein, welche wiederum aus 3 TU-12 besteht (vgl. Fig.1b, 3.bzw.4. Ebene). Für jedes Element (TU-12 bzw. TU-2 bzw. TUG-2) sind die vorgesehenen Plätze im VC-4 exakt festgelegt.
TU-3: Die TU-3 besteht aus 774 Bytes mit 86 Spalten zu je 9 Bytes. Es können in einen STM-1 Rahmen drei TU-3 gemultiplext werden (vergleiche hierzu wiederum Fig.1c). Eine TUG-3 belegt dabei den Platz von 7 TU-2 bzw. von 21 TU-12 Elementen.

Darüber hinaus ist es bekannt, durch byte-weise Verschachtelung (interleaving) von einzelnen STM-1 Transportrahmen beispielsweise einen STM-4 Rahmen (vierfache Verschachtelung) zu erzeugen, wodurch sich eine entsprechend vierfach höhere Bitrate (622,00 Mb/s) ergibt. Durch entsprechend vervielfachte Verschachtelung lassen sich allgemeine STM-N Rahmen erzeugen (N=1,4,16, 64...).

Ein zentrales Problem der SDH-Technologie besteht darin, daß mittels eines Netzwerkoperators dafür Sorge getragen werden muß, daß die Übertragungskapazität im einzelnen synchronen Transportrahmen möglichst gut ausgenutzt wird. Da die Datenströme jeweils zu Gruppen zusammengefaßt werden, die sich in einzelnen ihnen zugeordneten Zeitschlitzen wiederfinden, kann beim Entfall eines oder mehrer Datenströme der Zustand eintreten, daß zwar dessen bzw. deren zugehörige Zeitschlitze frei werden, diese jedoch innerhalb des Übertragungsrahmens so ungünstig liegen, daß die hierdurch frei werdende Übertragungskapazität für den Transport eines größeren Datenstromes nicht genutzt werden kann. Diesen Fall bezeichnet man als Blockierungszustand (blocking situation).

In einem solchen Fall ist es wünschenswert, daß die blockierenden Datenströme innerhalb des STM-Signals so umorganisiert werden, daß das "Einmappen" eines neuen, größeren Datenstroms in den synchronen Transportrahmen gewährleistet wird.

In einem aus der SDH-Praxis bekannten Verfahren können die an den freizumachenden Zeitschlitzen angeordneten Datenströme durch Umkonfigurierung von STM-Sender und STM-Empfänger umsortiert werden. Um dieses fehlerfrei ("hitless") zu ermöglichen, muß dazu das Umschalten von Sender und Empfänger synchronisiert sein. Dies ist zwar für Signalübertragungen innerhalb eines Netzwerkknotens noch möglich, wenngleich es einen hohen Hardwareaufwand erfordert, scheidet jedoch bei der Übertragung zwischen zwei Netzwerkknoten aus, da die Signalverzögerung von Sender zu Empänger nicht vorhersehbar ist, der Netzwerkmanager aber eine bestimmte nicht vorhersehbare Zeit benötigt, um STM-N Sender und STM-N Empfänger neu zu konfigurieren. Dies bedeutet, daß bei diesem bekannten Verfahren durch die Umkonfigurierung Fehler bzw. Kurzunterbrechungen beim Datenverkehr eintreten.

Der Erfindung liegt davon ausgehend die Aufgabe zugrunde, eine Umkonfigurierung des Netzwerks zwecks einer optimalen Ausnutzung der Übertragungskapazität zu ermöglichen, ohne daß Übertragungsfehler auftreten.

Diese Aufgabe wird erfindungsgemäß bei einem Telekommunikationsnetzwerk der eingangs genannten Art dadurch gelöst, daß zum Umkonfigurieren der Datenströme im Netzwerk sende- und empfangsseitige Umschaltmittel vorgesehen sind, in deren erster Betriebsweise ein umzukonfigurierender Datenstrom vom Sender gleichzeitig in seinen bisherigen (alten) Zeitschlitzen und in den gewünschten (neuen) Zeitschlitzen eingemapped gesendet und vom Empfänger in den alten Zeitschlitzen empfangen wird, in dessen zweiter Betriebsweise der gleichzeitig vom Sender in beiden Zeitschlitzen eingemappt gesendete Datenstrom vom Empfänger nach dessen Umschalten in den gewünschten (neuen) Zeitschlitzen empfangen wird, und in dessen dritter Betriebsweise der Sender nach dem Umschalten des Empfängers auf die gewünschten (neuen) Zeitschlitze nur noch in den gewünschten (neuen) Zeitschlitzen sendet.

Gemäß der verfahrensmäßigen Variante der Erfindung wird diese Aufgabe dadurch gelöst, daß zur Umkonfigurierung von Datenströmen innerhalb des Netzwerkes der umzukonfigurierende Datenstrom zunächst gleichzeitig in seinen bisherigen (alten) Zeitschlitzen und in den gewünschten (neuen) Zeitschlitzen eingemappt gesendet und in den alten Zeitschlitzen empfangen wird, daß anschließend nach dem Umschalten des Empfängers die gewünschten (neuen) Zeitschlitze empfangen werden und daß danach der umkonfigurierte Datenstrom nur noch in die gewünschten (neuen) Zeitschlitze eingemappt gesendet wird.

Der zentrale Gedanke der Erfindung besteht darin, daß in einem ersten Schritt zunächst die Datenströme sowohl in den alten als auch in den neuen Zeitschlitzbereichen eingemappt werden, anschließend der STM-N-Empfänger vom Empfang der alten Zeitschlitze auf die neuen Zeitschlitze umschaltet und danach der Sender den Sendevorgang auf dem alten Zeitschlitz beendet. In den somit frei gewordenen alten Zeitschlitzen kann nun in vorteilhafter Weise ein neuer Datenstrom in Kombination mit weiteren Zeitschlitzen eingemappt werden.

Der Vorteil dieser Lösung besteht darin, daß ein sog. "Grooming" der Datenströme im STM-Signal während der Datenübertragung fehlerfrei ("hitless") erfolgen kann. D.h., es können keine Blockierungsfälle eintreten, da das Managementsystem oder die Netzwerkknoten-Software auf die Umkonfigurierung achtet.

Ein weiterer Vorteil besteht darin, daß zur Durchführung der erfindungsgemäßen Lösung keine Synchronisation von Sender und Empfänger im Zeitpunkt des Umschaltens erforderlich ist.

Nach dem Umschalten ist der alte Zeitschlitz nunmehr frei für andere Datenströme. Falls erforderlich können nachfolgende Datenströme entsprechend seriell nacheinander umkonfiguriert werden. Die Fehlerfreiheit der beschriebenen Umkonfiguration ist nur dann gegeben, wenn alte und neu Datenströme in denselben STM-N Rahmen eingemappt sind, da Verzögerungen zwischen zwei STM-N Signalen innerhalb eines Netzwerkes nicht vorhersehbar sind.

Vorteilhafte Gestaltungen der erfindungsgemäßen Lösung gehen aus den Unteransprüchen hervor. Dabei befinden sich die alten und neuen Zeitschlitze des umzukonfigurierenden Datenstroms bevorzugt innerhalb desselben STM-1 Transportrahmens oder entsprechend verschachtelt in den jeweiligen Zeitschlitzen eines STM-N, z.B. STM-4 oder STM-16 Transportrahmens.

Der Umschaltvorgang erfolgt bevorzugt außerhalb desjenigen Bereichs im STM-1 Rahmen, in dem dieselbe Information in den alten und neuen Zeitschlitzen gesendet wird, damit Umschaltfehler vermieden werden.

Weiter bevorzugt findet das Umschalten auf die neuen Zeitschlitze während der Übertragung des Managementabschnittes (SOH) des Transportrahmens statt, insbesondere während der Übertragung des SOH- Bytes der ersten Zeile des Managementabschnittes des Transportrahmens.

In bestimmten Situationen, wenn neue Datenströme in das STM-N Signal eingemappt werden sollen, kann es notwendig sein, eine Mehrzahl von Datenströmen umzukonfigurieren. Um die Menge der umzukonfigurierenden Datenströme herabzusetzen, ist es möglich, einzelne TU-12s in Gruppen anzuordnen, in sog. TUG-2s. Darüber hinaus können TUG-2s und TU-2s in TUG-3s gruppiert werden sowie TUG-3s und TU-3s in VC-4s. Wenn möglich sollte nur ein teilweise gefüllter VC-4 in dem STM-N Rahmen vorhanden sein. Ein neuer VC-4, TU-3 oder TU-2 kann dann ohne die Umänderung von TUs in den STM-N Rahmen eingemappt werden. Die Gruppierung von TUs/TUGs zu TUGs/VC-4s höherer Ordnung kann automatisch durch das Netzwerkmanagementsystem erfolgen. Dabei muß sich der Netzwerkoperator keine Gedanken machen, wie die STM Rahmen zur Verhinderung von Blockierfällen aufzufüllen sind bzw. wir die jeweiligen TUs reorganisiert werden müssen, damit neue Datenströme in den STM-N Rahmen eingemappt werden können. Der Netzwerkoperator muß letztlich nur die maximal zur Verfügung stehende Kapazität und die Menge der bislang genutzten Kapazität kennen.

Die oben beschriebene Erfindung kann verwendet werden sowohl zur Umkonfigurierung von in STM-N Rahmen eingemappten Datenströmen im Netzwerklevel als auch im Knotenlevel. Alternativ kann das Umkonfigurieren von TUs in ein STM-N- oder knoteninternes Signal synchron bei Sender und Empfänger erfolgen.

Die Anwendung der erfindungsgemäßen Lösung beschränkt sich nicht auf SDH-Netzwerke. Vielmehr ist die Übertragung auch auf Telekommunikationsnetzwerke vergleichbarer Standards, z.B. SONET, entsprechend gegeben.

Die Erfindung wird im folgenden anhand einer zwei Ausführungsbeispiele darstellenden Zeichnung näher erläutert.

Dabei zeigen:
- Fig.1a: eine STM-1 Rahmenstruktur, wie sie aus dem Stand der Technik bekannt ist,
- Fig.1b: den hierarchischen Aufbau einer bekannten SDH-Struktur
- Fig.1c: verschiedene Größen von bekannten TU-Rahmenelementen
- Fig. 2: eine Skizze zur Erläuterung des Einmappungsvorgangs eines Datenstromes nach dem ersten Ausführungsbeispiel der Erfindung, vor der Umkonfigurierung
- Fig. 3,4: Skizzen zur Erläuterung des Einmappungsvorgangs eines Datenstromes nach Fig.2 während der Umkonfigurierung
- Fig. 5: eine Skizze zur Erläuterung des Einmappungsvorgangs eines Datenstromes nach Fig.2 nach Abschluß der Umkonfigurierung
- Fig.6: eine Skizze zur Erläuterung der erlaubten bzw. nicht erlaubten Umschaltzeitpunkte für Empfänger bzw. Sender gemäß Fig. 2 bis 5
- Fig.7.1 bis 7.4: Skizzen zur Erläuterung eines zweiten Ausführungsbeispiels der Erfindung für ein STM-4 Netzwerk.

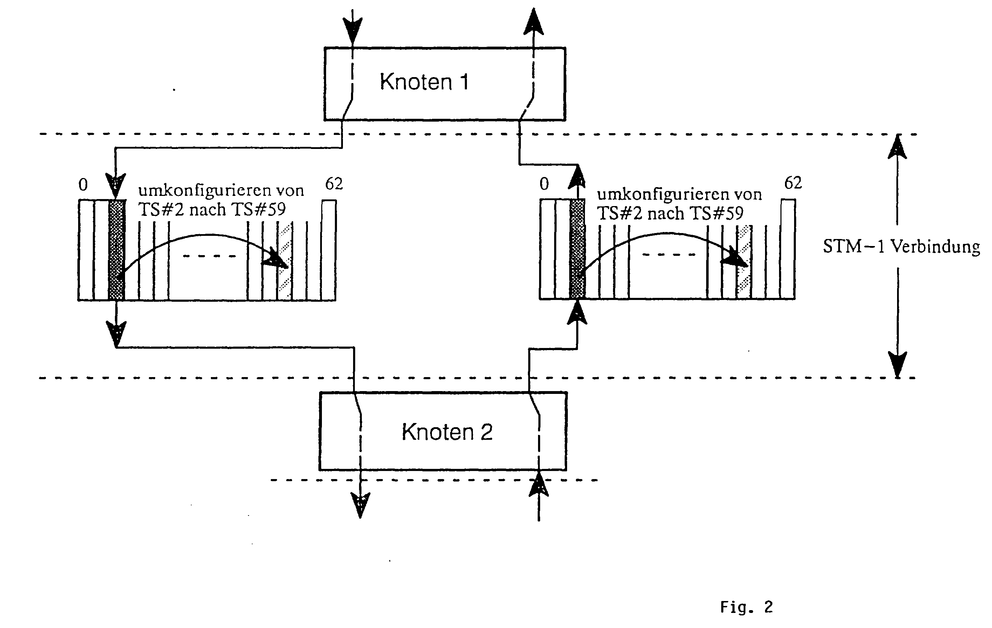

Fig. 2 zeigt zwischen zwei Netzwerkknoten (Node 1, Node 2) angeordnete Transportrahmen STM-1, die zu Veranschaulichungszwecken nur auszugsweise dargestellt sind.

Der linke Transportrahmen wird von Knoten 1 zu Knoten 2 transportiert und der rechte Transportrahmen von Knoten 2 zu Knoten 1, wie dies aus den Pfeilrichtungen hervorgeht.

Die bisherige Einmappung des Datenstromes TU-12 innerhalb des Transportrahmens erfolgt an der Stelle des Zeitschlitzes #2. Gewünscht für die zukünftige Position des Datenstromes ist Zeitschlitz #59.

Um das Umschalten von Zeitschlitz #2 auf Zeitschlitz #59 zu erreichen, wird gemäß Fig. 3 zunächst das Signal gleichzeitig zu beiden Zeitschlitzen eingemappt gesendet und vom Empfänger am Knoten 2 entsprechend empfangen. Das Aussenden von Knotenpunkt 2 aus erfolgt ebenfalls gleichzeitig auf beide Zeitschlitze #2 und #59.

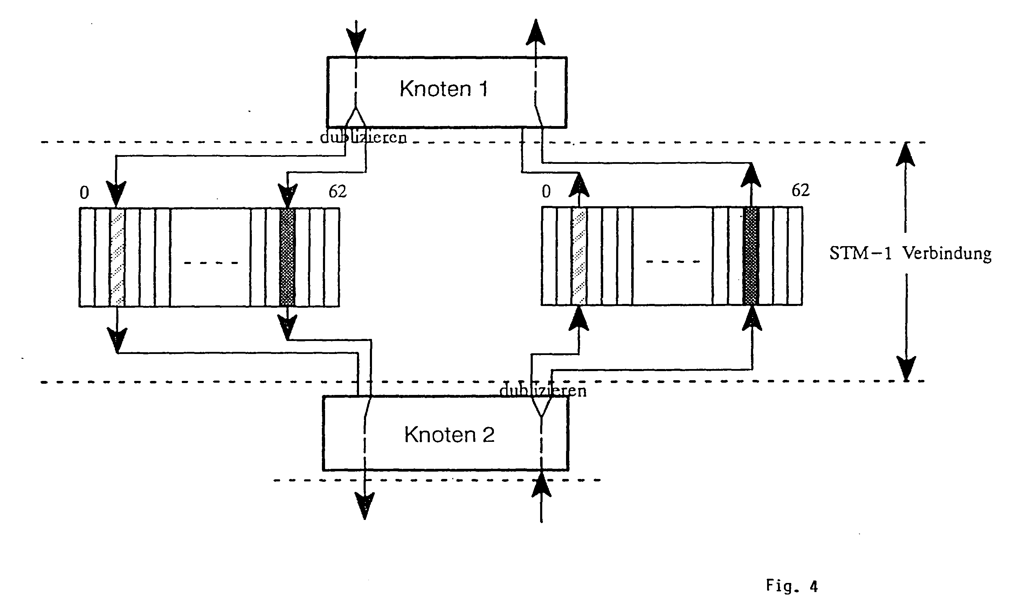

Anschließend erfolgt, wie dies aus Fig. 4 hervorgeht, ein Umschalten von Zeitschlitz #2 auf Zeitschlitz #59, in dem die jeweiligen Empfänger vom Empfang des alten Zeitschlitzes #2 auf den neuen Zeitschlitz übergehen. Dies ist durch den Übergang schraffiert bzw. umgekehrt dargestellt.

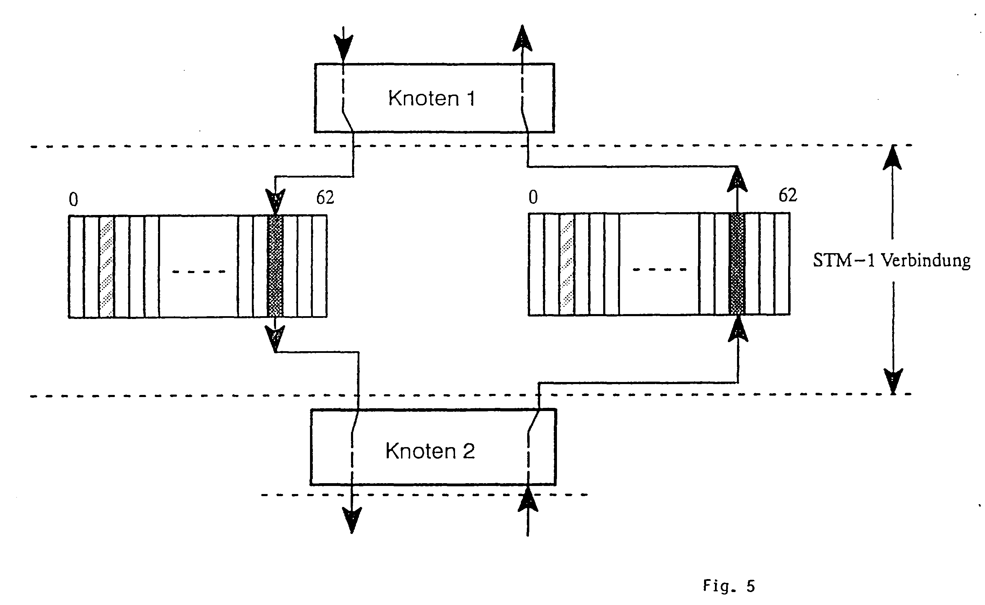

Wie dann schließlich aus Fig. 5 hervorgeht, steht der Zeitschlitz #2 nach seinem Ausblenden zur weiteren Konfiguration zur Verfügung, da ein weiteres Senden nur noch im Zeitschlitz #59 erfolgt.

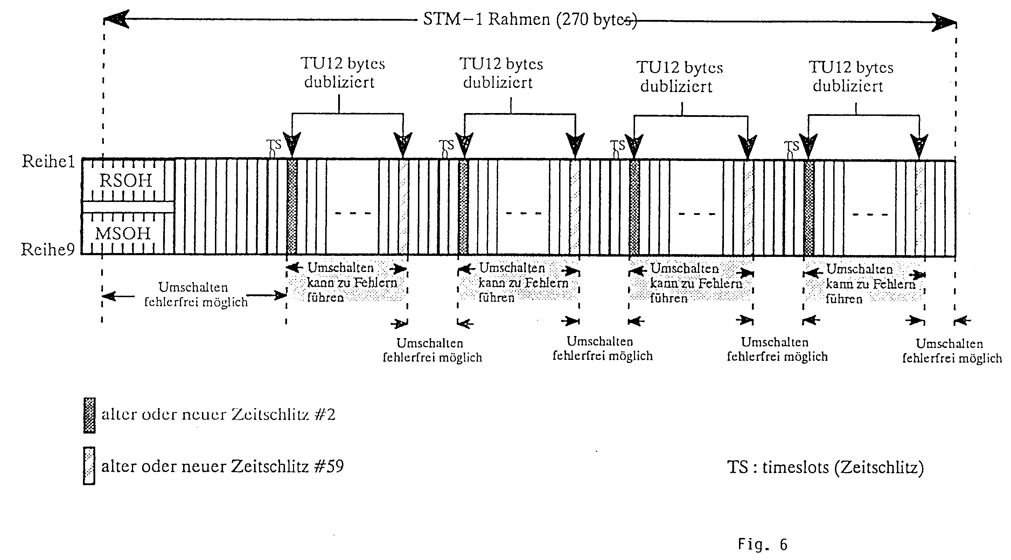

Fig. 6 dient zur Erläuterung, zu welchen Zeitpunkten, d.h. an welchen Stellen des STM-1 Rahmens, ein Umschalten des Empfängers vom Empfang gleichzeitig beider Zeitschlitze auf die neuen Zeitschlitze zugelassen ist.

Es ist erkennbar, daß hierzu jeder Bereich erlaubt ist, welcher außerhalb liegt desjenigen Bereichs, der durch die alten bzw. neuen Zeitschlitze begrenzt ist. Dieser bevorzugte Bereich entspricht demjenigen, der in Fig. 6 schraffiert ist. Dabei entspricht der alte Zeitschlitz #2 der linken Bereichsgrenze und der neue Zeitschlitz #59 der rechten Bereichsgrenze in diesem Ausführungsbeispiel. Der vorteilhafte Zeitpunkt (besonders für STM-N Signale) zum Umschalten des Empfängers liegt jedoch im Bereich des Managementabschnittes SOH und dort wiederum bevorzugt in der ersten Spalte.

Das zuvor dargestellte Ausführungsbeispiel bezog sich auf einen STM-1 Rahmen, während das im folgenden dargestellte Ausführungsbeispiel sich auf einen STM-4 Rahmen bezieht, welcher durch byteweise verschachtelte STM-1 Rahmen (4 Stück) gebildet ist.

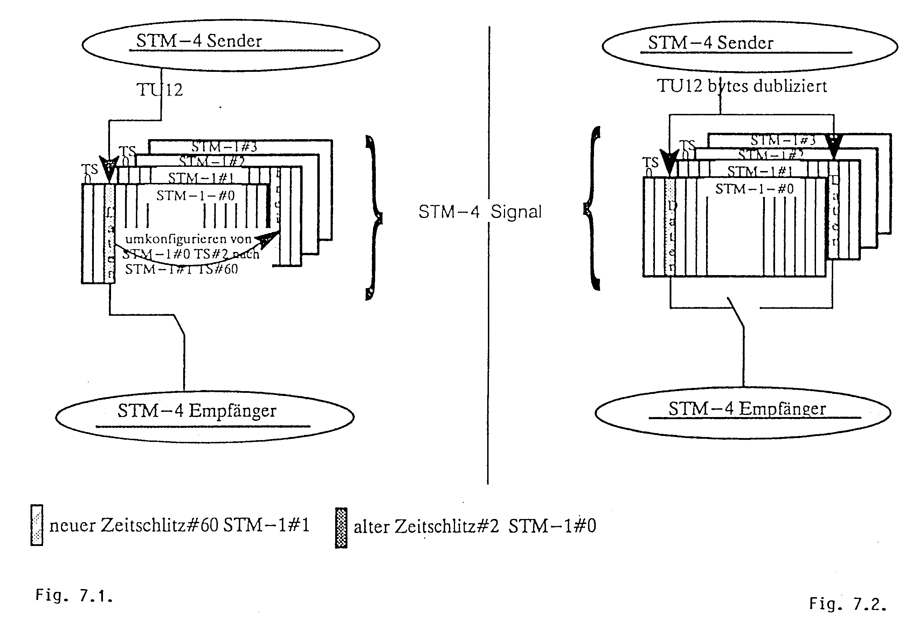

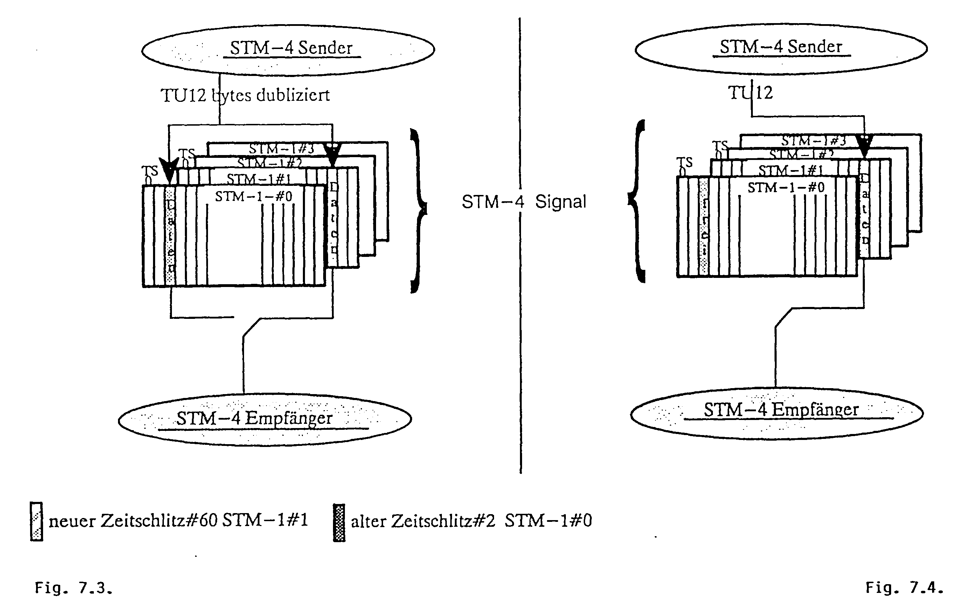

Wie aus Fig. 7.1 beispielhaft hervorgeht, soll eine Umkonfiguration erfolgen von den alten Zeitschlitzen, der sich an der Stelle Nr. 2 des vorderen STM-1 Rahmens (#0) befindet auf den neuen Zeitschlitz, der sich an Position #60 im STM-1 Rahmen #1 dahinter befindet.

Wie aus Fig. 7.2 hervorgeht wird also zum Beginn der Umkonfigurierung auf beiden Zeitschlitzen gleichzeitig gesendet und vom Empfänger zunächst auf den alten Zeitschlitzen empfangen.

Anschließend, zu demjenigen in Fig. 7.3 dargestellten Zeitpunkt schaltet der Empfänger auf die neuen Zeitschlitze um, während der Sender noch auf beiden Zeitschlitzen sendet. Unmittelbar danach (Fig. 7.4) unterbricht der Sender den Sendevorgang auf den alten Zeitschlitzen und sendet nunmehr nur noch auf den neuen Zeitschlitzen.

Es ist somit ersichtlich, daß das Grundprinzip auch beim zweiten Ausführungsbeispiel erhalten bleibt, während nur die Organisationsstruktur im STM-4 Rahmen aufgrund der byteweisen Verschachtelung gegenüber dem alleinigen STM-1 Rahmen verändert ist.

Entsprechend lassen sich STM Rahmen höherer Ordnung (16 oder 64) je nach Fortschritt der Technologie entsprechend betreiben.

## Patentansprüche

1. Telekommunikationsnetzwerk zur Verarbeitung von digitalen Signalen, insbesondere nach dem Synchronous Digital Hierarchy (SDH)- Standard, bei welchem der Transport von digitalen seriellen Datenströmen (tributary units, TU) innerhalb eines Knotenpunktes oder zwischen zwei Knotenpunkten mittels synchroner Transportrahmen (STM-N) erfolgt, welche einen zeilen- und spaltenweisen Aufbau mit einzelnen Blöcken von jeweils insbesondere 8 Bit aufweisen und aus einem die Nutzlast (payload) enthaltenden Abschnitt sowie einem Managementinformationen enthaltenden Abschnitt (Section Overhead, SOH; path overhead POH) besteht, wobei in dem für die Nutzlast vorgesehenen Abschnitt des jeweiligen Transportrahmens (STM-N) Datenströme unterschiedlicher Größen und Bitraten (TU-12; TU-2; TU-3; VC-4) in vorgegebene Zeitschlitze eingemappt werden,
**dadurch gekennzeichnet**, daß zum Umkonfigurieren der Datenströme im Netzwerk sende- und empfangsseitige Umschaltmittel vorgesehen sind, in deren erster Betriebsweise ein umzukonfigurierender Datenstrom vom Sender gleichzeitig in seinen bisherigen (alten) Zeitschlitzen und in den gewünschten (neuen) Zeitschlitzen eingemapped gesendet und vom Empfänger in den bisherigen (alten) Zeitschlitzen empfangen wird, in deren zweiter Betriebsweise der gleichzeitig vom Sender in beiden Zeitschlitzen eingemappt gesendete Datenstrom vom Empfänger nach dessen Umschalten in den gewünschten (neuen) Zeitschlitzen empfangen wird, und in deren dritter Betriebsweise der Sender nach dem Umschalten des Empfängers auf die gewünschten (neuen) Zeitschlitze nur noch in den gewünschten (neuen) Zeitschlitzen sendet.

2. Telekommunikationsnetzwerk nach Anspruch 1,
**dadurch gekennzeichnet**, daß die alten und neuen Zeitschlitze des umzukonfigurierenden Datenstroms sich innerhalb desselben STM-1 Transportrahmens befinden.

3. Telekommunikationsnetzwerk nach Anspruch 1,
**dadurch gekennzeichnet**, daß sich die Zeitschlitze des umzukonfigurierenden Datenstroms in unterschiedlichen, byteweise zueinander verschachtelten STM-N Transportrahmen, insbesondere in 4 STM-1 Rahmen eines STM-4 Rahmens, befinden.

4. Telekommunikationsnetzwerk nach einem der vorigen Ansprüche,
**dadurch gekennzeichnet**, daß für STM-1 Signale das Umschalten des Empfängers vom Empfang der alten Zeitschlitze auf die neuen Zeitschlitze außerhalb desjenigen Rahmenbereichs erfolgt, der zwischen beiden Zeitschlitzen liegt.

5. Telekommunikationsnetzwerk nach einem der vorherigen Ansprüche,
**dadurch gekennzeichnet**, daß für STM-N Signale das Umschalten des Empfängers auf die neuen Zeitschlitze während der Übertragung des Managementabschnittes (SOH) des Transportrahmens erfolgt.

6. Telekommunikationsnetzwerk nach einem der vorherigen Ansprüche,
**dadurch gekennzeichnet**, daß das Umschalten auf die neuen Zeitschlitze während der Übertragung des SOH- Bytes der ersten Zeile des Managementabschnittes des Transportrahmens erfolgt.

7. Telekommunikationsnetzwerk nach einem der vorherigen Ansprüche ,
**dadurch gekennzeichnet**, daß mehrere Datenströme seriell nacheinander oder gleichzeitig parallel umkonfiguriert werden.

8. Verfahren zum Managen eines Telekommunikationsnetzwerks, insbesondere basierend auf dem Synchronous Digital Hierarchy (SDH)- Standard, bei welchem digitale serielle Datenströme (tributary units, TU) innerhalb eines Knotenpunktes oder zwischen zwei Knotenpunkten mittels synchroner Transportrahmen (STM-N) transportiert werden, welche einen zeilen- und spaltenweise organisierten Aufbau mit einzelnen Blöcken von jeweils insbesondere 8 Bit aufweisen und aus einem die Nutzlast (payload) enthaltenden Abschnitt sowie einem Managementinformationen enthaltenden Abschnitt (Section Overhead, SOH; path overhead POH) bestehen, wobei in den für die Nutzlast vorgesehenen Abschnitt des jeweiligen Transportrahmens (STM-N) Datenströme unterschiedlicher Größen und Bitraten (TU-12; TU-2; TU-3; VC) in vorgegebene Zeitschlitze eingemappt werden,
**dadurch gekennzeichnet**, daß zur Umkonfigurierung von Datenströmen innerhalb des Netzwerkes der umzukonfigurierende Datenstrom zunächst gleichzeitig in seinen bisherigen (alten) Zeitschlitzen und in den gewünschten (neuen) Zeitschlitzen eingemappt gesendet und in den alten Zeitschlitzen empfangen wird, daß anschließend der Empfänger auf den Empfang der gewünschten (neuen) Zeitschlitze umgeschaltet wird und daß danach der umkonfigurierte Datenstrom nur noch in die gewünschten (neuen) Zeitschlitze eingemappt gesendet wird.

9. Verfahren zum Managen eines Telekommunikationsnetzwerks nach Anspruch 8,
**dadurch gekennzeichnet**, daß das Umschalten des Senders von beiden Zeitschlitzen auf die neuen Zeitschlitze erst nach Ablauf einer Mindestzeit erfolgt, nach der sichergestellt ist, daß der Empfänger umgeschaltet hat.
